# EUROPEAN PATENT APPLICATION

(11) **EP 1 864 907 A2**
(43) Date of publication of application: **12.12.2007**
(21) Application number: 07001400.6
(22) Date of filing: 23.01.2007
(51) Int. Cl.: B65B 5/10, B65B 57/00

(54) **Apparatus for identifying cassette of automatic medice packaging machine and method thereof**

(30) Priority: 05.06.2006 KR 20060050361
(71) Applicant: JVM Co., Ltd., Daegu 704-170 (KR)
(72) Inventor: Kim, Jun-ho, Dalseo-gu, Daegu, 704-730 (KR)
(74) Representative: Grünecker, Kinkeldey, Stockmair & Schwanhäusser Anwaltssozietät

(57) **Abstract**

Disclosed is an apparatus automatically identifying cassette (100) (medicine container) in non-contact fashion using RF tag (110) (a sticker type) attached to cassette and a method thereof. The apparatus includes cassette (100) to which RF tag (110), in which information on medicine and cassette are recorded, is attached to predetermined position; a cartridge (200) reading information of RF tag in non-contact fashion and combining read cassette information (including the medicine information) by identifying the cartridge to output combined information as medicine position information; a position scan board (300) acquiring, storing, and updating information of cassette (100) coupled with cartridge (110) through communication with cartridge, and to output modified information; and a commercial terminal (400) transmitting prescribing command to cartridge and medicine position information transmitted from position scan board to exterior, so that information of cassette (100) and stored medicine information are recognized from cartridge (200) in non-contact between cassette and cartridge.

## Description

### BACKGROUND OF THE INVENTION

### Field of the Invention

The present invention relates to an apparatus for identifying a cassette of an automatic medicine packaging machine, and more particularly, to an apparatus for automatically identifying a cassette (a medicine container) in non-contact fashion using a radio frequency (RF) tag (a sticker type) attached to the cassette and a method thereof.

### Description of the Related Art

Humans are afraid of a great deal of diseases throughout their lives, and actually, frequently suffer from various diseases. Thus, efforts for treating various diseases continue and a variety of medicines for curing the diseases have appeared.

According to a kind of disease, some diseases can be cured with a single medicine. However, since human body is generally attacked with diseases for complex reasons and complex symptoms appear, a prescription is made by properly mixing several medicines according to the symptoms for the effective treatment of the diseases. These medicines are manufactured and supplied in commercial quantities in the form of a tablet or powder medicine for the convenience of prescription and use, and where necessary medicines are packaged by a dose according to the prescription of a medical doctor or a pharmacist and supplied to patients.

According to a conventional packaging method of medicines, a sheet is folded to be overlapped and welded along the longitudinal direction by a regular pitch to continuously form pockets, necessary medicines are inserted into the respective pockets and openings of the pockets are sealed to package the medicines in the form of packs.

However, since the conventional medicine packaging method is almost always carried out manually by a pharmacist, a great deal of man power and time is required to compound the prescription. In order to solve this problem, an automatic packaging machine has been developed.

Generally, in the automatic medicine packaging machine, medicine is accommodated in cassettes according to a kind of medicine, and tablets prescribed according to patient's diseases are automatically discharged to package every dose. In the automatic medicine packaging machine, plural cassettes in which a variety of tablets are accommodated are arranged in a plurality of frames, the cassettes are arranged in the frames so as to respectively discharge the prescribed tablets as required per dose down through respective chutes formed in the frames, the tablets discharged from the frames are collected in a hopper, and the tablets collected in the hopper are discharged down from the hopper to be sealed and packaged with packaging paper by a packaging device.

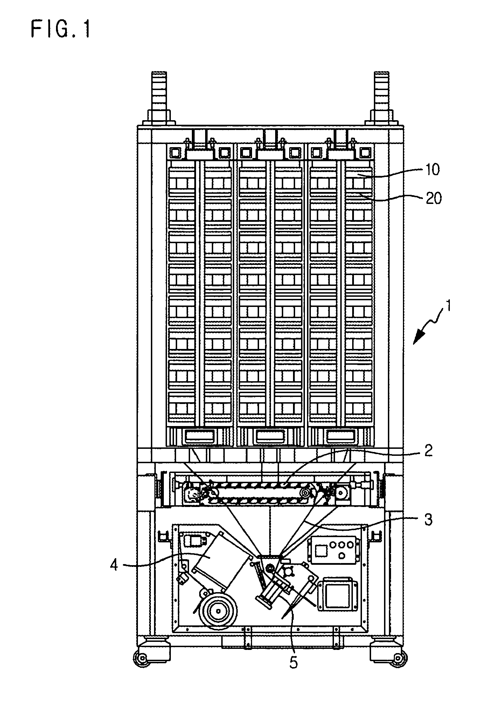

FIG. 1 is a front side view schematically illustrating a conventional automatic medicine packaging machine;

The conventional automatic medicine packaging machine 1 includes a plurality of cassettes 10 and cartridges 20 that are provided at the upper side of the automatic medicine packaging machine 1, a transporting tray 2 disposed at the lower side of the automatic medicine packaging machine 1, and a hopper 3, a printer 4 and a heater 5 that are provided at the lower side of the transporting tray 2.

In the conventional automatic medicine packaging machine 1 as constructed as described above, tablets are discharged from the cassettes 10 to the transporting tray 2 in accordance with the inputted prescription and the transporting tray 2 drops the tablets into the hopper 3 by a dose.

The tablets dropped down into the hopper 3 are accommodated into packaging sheets printed by the printer 4, and the packaging sheets are welded by the heater 5 to continuously package the tablets by the unit of a dose.

In the conventional automatic medicine packaging machine, whether the cassettes 10 are mounted to or separated from the cartridges 20 is checked in non-contact fashion. If the cassettes 10 are mounted to the cartridges 20, information is read out from a memory (EEPROM) for identification of contents, mounted to the cassette, to identify the contents accommodated in the cassettes 10.

Here, in order to determine whether the cassettes 10 are mounted to or separated from the cartridges 20, each of the cassettes 10 includes an injection molded part and a terminal for the installation of the memory and each of the cartridges (cartridges) 20 includes a socket so that whether the cassettes are mounted or not is determined by determining whether the terminals are inserted into the sockets.

However, in this case, since the terminals are separated from and inserted again into the sockets whenever the tablets are supplemented into the cassettes, the terminals and the sockets are worn away due to the contact friction so that a loose contact is frequently generated. When the loose contact occurs, since the cassettes are not actually identified even when the cassettes are mounted to the cartridges, medicines cannot be supplied to a corresponding cassette.

Moreover, in the conventional automatic medicine packaging machine, since identifications ID from which information on the cassette can be read is provided in only the cassettes but the cartridge does not include the identifications ID, positions of corresponding medicines cannot be automatically identified.

### SUMMARY OF THE INVENTION

Therefore, the present invention has been made in view of the above and/or other problems occurring in the conventional automatic medicine packaging machine, and it is an aspect of the present invention to provide an apparatus for identifying a cassette of an automatic medicine packaging machine in which a radio frequency (RF) tag (a sticker type) is attached to the cassette so that the cassette is automatically identified in non-contact fashion using the RF tag and a method thereof.

It is another aspect of the present invention to provide an apparatus for identifying a cassette of an automatic medicine packaging machine in which an RF tag for the non-contact identification of the cassette is attached to the cassette so that structures for the automatic identification of the cassette such as an EEPROM, an injection molded part, or the like can be eliminated to reduce manufacturing costs and time for the manufacturing and process can be shortened, and a method thereof.

It is another aspect of the present invention to provide an apparatus for identifying a cassette of an automatic medicine packaging machine in which an RF tag for the non-contact identification of the cassette is employed so that a great deal of data can be stored, a rate of the identification and security are increased, performance of the identification rate is increased, and identification distance can be elongated, and a method thereof.

In accordance with the present invention, the above and other objects can be accomplished by the provision of an apparatus for identifying a cassette of an automatic medicine packaging machine comprising: a cassette to which a radio frequency tag, in which medicine information and cassette information are recorded, is attached to a predetermined position; a cartridge comprising a prescription controlling unit to control the mounted cassette to discharge tablets to a transporting tray when the prescribing command is received from the exterior, and a position identifying unit to determine whether the cassette is mounted or not through whether information in the radio frequency tag attached to the cassette is read, and to read the information of the radio frequency tag to transmit the read information and an identification (cartridge number) of the position identifying unit when position information is requested by the exterior; a position scan board to acquire, store, and update information of the cassette coupled with the cartridge through the communication with the cartridge, and to output modified information; and a commercial terminal to transmit a prescribing command to the cartridge and the medicine position information transmitted from the position scan board to exterior.

Moreover, the apparatus further comprises a reader to information of medicine to be supplemented to the cassette, and a server computer to acquire and stores information of the cartridge mounted to the automatic medicine packaging machine and the cassette information through the communication with the commercial terminal, to identify the medicine position information through the acquired information, and to recognize information of medicine supplemented to respective cassettes through the reader.

The position identifying unit further comprises a radio frequency reader to read information recorded to the radio frequency tag attached to the cassette in a non-contact fashion; a serial EEPROM to which information on a corresponding cartridge number (fixed address) is recorded; a position central processing unit connected to the radio frequency reader to determine whether the cassette is coupled or not, to recognize the medicine information of the coupled cassette and the cassette information, and to output the recognized medicine information and cassette information and the cartridge information acquired by the serial EEPROM when the exterior requests the position information; and a transceiver to transmit the medicine information and the cassette information outputted from the position central processing unit and the cartridge information to the position scan board.

In accordance with another aspect of the present invention, there is provided a method of identifying a cassette of an automatic medicine packaging machine comprising: controlling a mounted cassette through a prescription controlling unit to discharge tablets to a transporting tray when a commercial terminal receives a prescribing command from exterior; acquiring and updating information of cassettes coupled with respective cartridges by a position scan board at a predetermined time interval, and transmitting the updated information to the commercial terminal when a position request command is received from the commercial terminal; identifying the position information of medicines through the cassette information and the cartridge information transmitted from the position scan board by the commercial terminal; and transmitting the position information of the identified medicines to a server computer.

Moreover, the method further comprises receiving and storing the position information of the medicines transmitted from the commercial terminal and identifying the position information of the medicines of respective automatic medicine packaging machines based on the stored information by the server computer; and acquiring, storing, and identifying medicine supplementing information of respective cassettes that is acquired by a reader when the medicines are supplemented to the cassettes.

In the above, the position scan board acquires cartridge information and information of the cassette coupled with a corresponding cartridge through a communication with a plurality of cartridges mounted in a single automatic medicine packaging machine at a one (1) second interval, stores the acquired information to an internal memory, and transmits modified information to the commercial terminal when the modified information exists.

### BRIEF DESCRIPTION OF THE DRAWINGS

These and/or other objects and advantages of the present invention will become apparent and more readily appreciated from the following description of the embodiments, taken in conjunction with the accompanying drawings, in which:
FIG. 1 is a front side view schematically illustrating a conventional automatic medicine packaging machine;
FIG. 2 is a block diagram illustrating a cassette identifying apparatus of an automatic medicine packaging machine according to an embodiment of the present invention; and
FIG. 3 is a flowchart illustrating a cassette identifying method of an automatic medicine packaging machine according to an embodiment of the present invention.

### DESCRIPTION OF THE PREFERRED EMBODIMENTS

Hereinafter, an apparatus according to embodiments of the present invention will be described in detail with reference to the accompanying drawings. In the following description of the present invention, if the detailed description of the already known structure and operation may confuse the subject matter of the present invention, the detailed description thereof will be omitted.

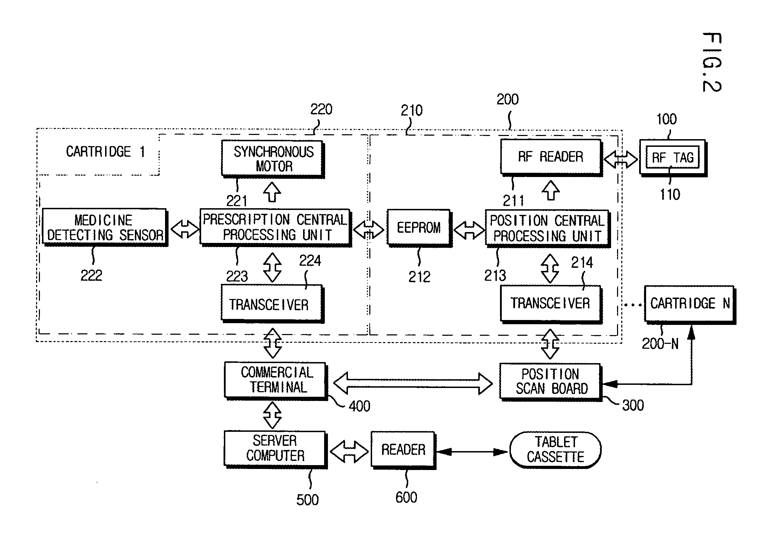

FIG. 2 is a block diagram illustrating a cassette identifying apparatus of an automatic medicine packaging machine according to an embodiment of the present invention.

Here, a reference numeral 100 is assigned to a cassette (a medicine container) in which a radio frequency (RF) tag 110, to which medicine information and cassette information are recorded, is installed at a predetermined position and which accommodates tablets as medicines. Although the RF tag 110 to which the cassette information and the medicine information are recorded may be attached to any position of the cassette 100, but preferably to the lower side (bottom) of the cassette 100. Unique identifications (floating addresses) are recorded to every cassette 100. Moreover, the cassettes 100 may be separated from and mounted to a cartridge 200 by a user.

Next, a reference numeral 200 is assigned to the cartridge including a prescription controlling unit 220 to control the mounted cassette 100 to discharge the tablets to a transporting tray when a prescribing command is transmitted from exterior and a position identifying unit 210 to determine whether the tablet cassette 100 is mounted or not in accordance with whether information of the RF tag 110 installed to the cassette 100 is read out or not and to read the information of the RF tag 110 to transmit the read information and own identification (a number of the cartridge). Here, a single automatic medicine packaging machine includes a plurality of the same cartridges (cartridges Nos. 1 to n) as the cartridge including all components as described above.

The prescription controlling unit 220 is identical to a prescription controlling unit employed in the conventional automatic medicine packaging machine, and includes a synchronous motor 221 to discharge the medicines (tablets) accommodated in the cassette 100, a medicine detecting sensor 222 as an infrared sensor to detect the discharged medicine, a prescription central processing unit 223 to control the discharge of the medicine in accordance with the prescribing command transmitted from exterior, and a transceiver 224 to communicate with the exterior for prescribing command data in RS-485 method.

The position identifying unit 210 includes an RF reader 211 to read the information recorded to the RF tag 110 attached to the cassette 100 in non-contact fashion, a serial EEPROM 212 on which information on the identification of a corresponding cartridge (a fixed address), a position central processing unit 213 connected to the RF reader 211 to determine whether the cassette 100 is coupled or not, to identify the medicine information and the cassette information of the coupled cassette 100, and to output the identified medicine information the cassette information and the cartridge information acquired from the serial EEPROM 212 when position information is demanded from the exterior, and a transceiver 214 the medicine information, the cassette information, and the cartridge information, outputted from the position central processing unit 213, to a position scan board 300 in the RS-485 communication protocol. Here, the RF reader 211 can carry out functions of reading information recorded to the RF tag 110 of the cassette 100 and of recording specific information to the RF tag 110.

A reference numeral 300 is assigned to the position scan board to acquire, store, and update the information on the cassettes 100 coupled with the respective cartridges through the communication with the position identifying unit 210 of the cartridge 200 in the RS-485 communication protocol and to output modified information. A single automatic medicine packaging machine includes a plurality of the cartridges, and the position scan board carries out the communication with the plurality of the mounted cartridges at a predetermined period to acquire the cassette information and the cartridge information (identifications of the cartridges).

A reference numeral 400 is assigned to a commercial terminal (a personal computer) to transmit the prescribing command to the prescription controlling unit 220 of the cartridge 200 and to transmit the information on the cassette 100 transmitted from the position scan board 300 to the exterior.

A reference numeral 600 is assigned to a reader to read information on medicines to be supplemented to the cassette 100, and is identical to the above-described RF reader 211.

A reference numeral 500 is assigned to a server computer (a personal computer) to acquire and store information on the cartridge and the cassette of a single automatic medicine packaging machine through the communication with the commercial terminal 400, to identify the position information of the medicines through the acquirement of the information, and to identify the information of the medicines supplemented to the respective cassettes through the reader 600. Here, the server computer 500 carries out the communication with the commercial terminals respectively provided in several automatic medicine packaging machines to identify the information on the cartridges, the cassettes, and the medicines which are provided in the respective automatic medicine packaging machines.

In the apparatus for identifying a cassette of an automatic medicine packaging machine, as constructed as described above, according to the present invention, when the user mounts a cassette 100 supplemented with the medicines is to a specific cartridge 200, the RF reader 211 of the position identifying unit 210 of the cartridge 200 reads the cassette information (the floating address and the cassette identification) stored to the RF tad 110 and the information of the medicines accommodated in a corresponding cassette 100 (for example, information on which how many kinds of tablets is accommodated) through the communication with the RF tag (a sticker type) 110 attached to the cassette 100. Here, the medicine information is recorded to the RF tag 110 by the user when the medicines are supplemented.

The read information on the cassette and the medicines is transmitted to the position central processing unit 213, and the position central processing unit 213 combines the information of the coupled cassette 100, the medicine information, and the identification (also, referred to as a fixed address) (information on the number of the cartridge) of a corresponding cartridge (cartridge No. 1) stored to the serial EEPROM 212 to each other to transmit the combined information to the position scan board 300 through the transceiver 214 to carry out the RS-485 communication.

The position scan board 300 stores and manages the cassette information, the medicine information, and the cartridge information that are transmitted from the corresponding cartridge, and transmits only changed information to the commercial terminal 400 when the cartridge information, the cassette information, and the medicine information that were eaten stored previously are changed. Here, the position scan board 300 transmits information on whether the cassettes are mounted to the respective cartridges, the information on the mounted cassettes, the medicine information, and the cartridge information to the commercial terminal 400 at the initial state such that the commercial terminal 400 stores the information.

Actually, since a plurality of cartridges are mounted to a single automatic medicine packaging machine, the position scan board 300 scans entire cartridges (cartridge Nos. 1 to n) at a predetermined time interval (for example, a time interval of 1 (one) second) to update the information on the cassettes coupled with the cartridges and transmits only the changed information to the commercial terminal 400 when the changed information is generated. Here, the respective cartridges include the same blocks as the block assigned by the reference numeral 200 in FIG. 2.

When the prescribing command is received from the exterior (a keyboard or other external device) while the cassette information is read by the method as described above, the commercial terminal 400 transmits the prescribing command to the prescription controlling unit 220 of the cartridge 200 through the communication.

The prescription central processing unit 223 of the prescription controlling unit 220 recognizes the prescribing command transmitted through the transceiver 224 and controls the synchronous motor 221 to be driven such that the tablets accommodated in the cassette 100 are discharged when the cartridge information (fixed address and cartridge number) stored in the serial EEPROM 212 is matched. Whether the tablets accommodated in the cassette 100 are discharged or not is detected by the medicine detecting sensor and the detected result is transmitted to the prescription central processing unit 223. The prescription central processor 223 stops the synchronous motor 221 when the tablets are discharged from the cassette 100 normally, and transmits the result to the commercial terminal 400.

On the other hand, the server computer 500 to totally control the respective automatic medicine packaging machines requests the information of the respective cartridges, the information of the cassettes coupled with the cartridges, and the medicine information to the commercial terminal 400, and the commercial terminal 400 transmits the cassette information of the respective cartridges and the medicine information that are stored in the internal memory to the server computer 500 in response to the request.

Thus, the server computer 500 stores the transmitted cartridge information and the information of the cassettes and the medicines corresponding to the cartridge information, and can identify precise position information of the corresponding medicines from the information.

Moreover, when the medicines accommodated in a specific cassette are supplemented, the user records information of supplementing the medicines to an RF tag of a corresponding cassette, and at this time, the reader 600 reads the information of the RF tag and transmits the read information to the server computer 500.

The server computer 500 stores the cassette information transmitted from the reader 600 and the medicine information stored in the corresponding cassette. Since the information of the cassettes of the respective cartridges transmitted from the commercial terminal 400 and the medicine information can be known, the amount of the medicines remaining in the corresponding cassette can be also known. Further, when a reference amount of the medicines to be supplemented is set previously, the amount of the remaining medicines is compared with the reference amount so that it can be determined when the medicines will be supplemented.

Thus, if the medicines must be supplemented, the commercial terminal 400 provided in the automatic medicine packaging machine is transmitted with information of supplementing the medicines to the specific cassette, and the commercial terminal 400 drives an associated display or an alarm transmitting device to notify the user when the medicines must be supplemented to which cassette. Thus, the user can easily perceive time when the medicines will be supplemented without directly checking the cassettes one by one by the user.

In other words, according to the present invention, since identifications are provided to the cartridges and the cassettes, respectively and it can be easily perceived whether the cassettes are coupled with the cartridges, the information of the cassettes coupled with the cartridges in the non-contact fashion, and the medicine information, the server computer can precisely identify the positions of the medicines of the respective automatic medicine packaging machines.

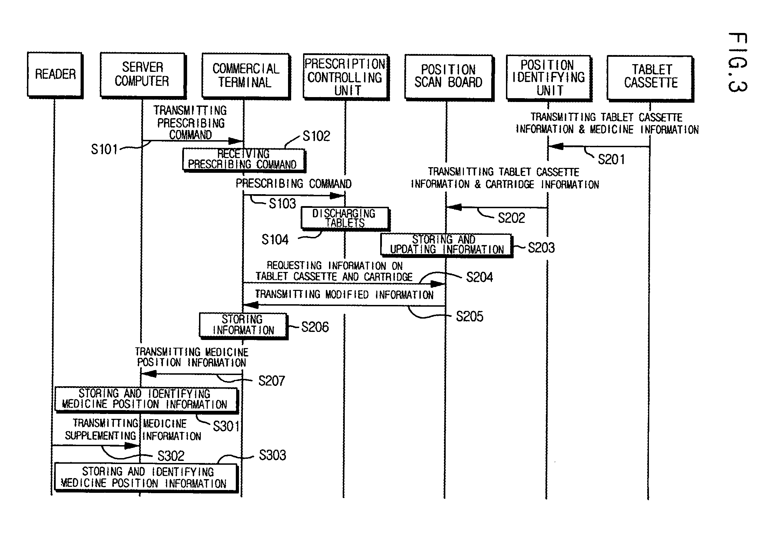

FIG. 3 is a flowchart illustrating a cassette identifying method of an automatic medicine packaging machine according to an embodiment of the present invention.

In the prescribing operation, when the commercial terminal 400 receives the prescribing command from the exterior in an operation S101, the prescribing command is received and stored in an operation S102, and the prescription controlling unit 220 controls the mounted cassette 100 to discharge the tablets to the transporting tray in an operation S103. Due to this control, the prescription controlling unit 220 discharges the tablets accommodated in the cassettes to the transporting tray in an operation S104.

Next, in an operation S201, the position identifying unit 210 provided in the cartridge reads the information of the cassette to be coupled (cassette information and medicine information), and the read cassette information, the medicine information, and the cartridge information are transmitted to the position scan board 300 in an operation S202. The position scan board 300 acquires the information of the cassettes coupled with the respective cartridges and the cartridge information and updates the acquired information at a predetermined time interval (for example, a time interval of 1 (one) second) in an operation S203.

Moreover, when the position request command is received from the commercial terminal 400 in an operation S204, the updated information is transmitted to the commercial terminal 400 in an operation S205. Here, the position scan board 300 transmits the updated information (modified information) to the commercial terminal 400 only when the information of the cassette coupled with a corresponding cartridge. Then, the commercial terminal 400 stores the modified information (cartridge information, cassette information, and medicine information) to the internal memory in an operation S206, and transmits the medicine position information (cartridge information, cassette information, and medicine information) to the server computer 400 in an operation S207.

The server computer 500 stores and identifies the medicine position information in an operation S301 and stores and recognizes the medicine supplementing information in an operation S303 when the medicine supplementing information is transmitted from the reader 600 in an operation S302. Thus, the server computer 500 can precisely determine that which cassette is mounted to which cartridge and how much the medicine remain in the cassette.

Here, even when a plurality of automatic medicine packaging machines are provided, the server computer can precisely and easily identify the medicine position information of the respective automatic medicine packaging machines using the above-described method.

As described above, according to the present invention, the RF tag (a sticker type) is attached to the cassette and the RF reader is added to the cartridge so that the cassettes can be automatically identified in the non-contact fashion.

Moreover, the RF tag for the non-contact recognition is attached to the cassette so that the structures for the automatic recognition of the cassettes (EEPROM and injection molded parts) can be removed. Thus, the manufacturing costs can be reduced and time for the manufacturing and processing can be also reduced.

Furthermore, the RF tag for the non-contact recognition is applied to the cassette, a great deal of data can be stored, a recognition rate and security are enhanced, and the recognition rate and distance can be also increased.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An apparatus for identifying a cassette of an automatic medicine packaging machine comprising:
a cassette to which a radio frequency tag, in which medicine information and cassette information are recorded, is attached to a predetermined position;
a cartridge to read the information of the radio frequency tag attached to the cassette in a non-contact fashion and to combine the read cassette information (including the medicine information) with an identification of the cartridge to output the combined information as medicine position information;
a position scan board to acquire, store, and update information of the cassette coupled with the cartridge through the communication with the cartridge, and to output modified information; and
a commercial terminal to transmit a prescribing command to the cartridge and the medicine position information transmitted from the position scan board to exterior.

2. The apparatus for identifying a cassette of an automatic medicine packaging machine according to claim 1, further comprising:
a reader to information of medicine to be supplemented to the cassette; and
a server computer to acquire and stores information of the cartridge mounted to the automatic medicine packaging machine and the cassette information through the communication with the commercial terminal, to identify the medicine position information through the acquired information, and to recognize information of medicine supplemented to respective cassettes through the reader.

3. The apparatus for identifying a cassette of an automatic medicine packaging machine according to claim 1, wherein the radio frequency tag comprises a sticker type radio frequency tag to be attached to a lower side of the cassette.

4. The apparatus for identifying a cassette of an automatic medicine packaging machine according to claim 1, wherein the cartridge comprises:
a prescription controlling unit to control the mounted cassette to discharge tablets to a transporting tray when the prescribing command is received from the exterior; and
a position identifying unit to determine whether the cassette is mounted or not through whether information in the radio frequency tag attached to the cassette is read, and to read the information of the radio frequency tag to transmit the read information and an identification (cartridge number) of the position identifying unit when position information is requested by the exterior.

5. The apparatus for identifying a cassette of an automatic medicine packaging machine according to claim 4, wherein the position identifying unit comprises:
a radio frequency reader to read information recorded to the radio frequency tag attached to the cassette in a non-contact fashion;
a serial EEPROM to which information on a corresponding cartridge number (fixed address) is recorded;
a position central processing unit connected to the radio frequency reader to determine whether the cassette is coupled or not, to recognize the medicine information of the coupled cassette and the cassette information, and to output the recognized medicine information and cassette information and the cartridge information acquired by the serial EEPROM when the exterior requests the position information; and
a transceiver to transmit the medicine information and the cassette information outputted from the position central processing unit and the cartridge information to the position scan board.

6. The apparatus for identifying a cassette of an automatic medicine packaging machine according to claim 1, wherein the position scan board scans entire cartridges provided in a single automatic medicine packaging machine at a predetermined time interval to acquire information of the cassettes coupled with the respective cartridges.

7. A method of identifying a cassette of an automatic medicine packaging machine comprising:
controlling a mounted cassette through a prescription controlling unit to discharge tablets to a transporting tray when a commercial terminal receives a prescribing command from exterior;
acquiring and updating information of cassettes coupled with respective cartridges by a position scan board at a predetermined time interval, and transmitting the updated information to the commercial terminal when a position request command is received from the commercial terminal;
identifying the position information of medicines through the cassette information and the cartridge information transmitted from the position scan board by the commercial terminal; and
transmitting the position information of the identified medicines to a server computer.

8. The method of identifying a cassette of an automatic medicine packaging machine according to claim 7, further comprising:
receiving and storing the position information of the medicines transmitted from the commercial terminal and identifying the position information of the medicines of respective automatic medicine packaging machines based on the stored information by the server computer; and
acquiring, storing, and identifying medicine supplementing information of respective cassettes that is acquired by a reader when the medicines are supplemented to the cassettes.

9. The method of identifying a cassette of an automatic medicine packaging machine according to claim 7, wherein the position scan board acquires cartridge information and information of the cassette coupled with a corresponding cartridge through a communication with a plurality of cartridges mounted in a single automatic medicine packaging machine at a one (1) second interval, stores the acquired information to an internal memory, and transmits modified information to the commercial terminal when the modified information exists.

10. The method of identifying a cassette of an automatic medicine packaging machine according to claims 7 or 8, wherein the server computer compares information of a corresponding cassette and the medicine information that are transmitted from the commercial terminal with a reference amount of the medicines previously set to supplement the medicine, and transmits the position of the corresponding cassette and a control command of supplementing the medicines for the supplement of the medicines to the commercial terminal when the medicine information acquired from the commercial terminal is less than the reference amount of the medicines.
